# EUROPEAN PATENT SPECIFICATION

(11) **EP 2 799 406 B1**
(45) Date of publication and mention of the grant of the patent: **31.10.2018**
(21) Application number: 12862220.6
(22) Date of filing: 26.12.2012
(51) Int. Cl.: F27B 7/38, F27B 3/12, C04B 7/47, F27D 15/02, F27D 3/12, F27D 9/00, F27D 99/00, F28C 3/16

(54) **SEAL STRUCTURE FOR COOLER DEVICE AND COOLER DEVICE PROVIDED THEREWITH**
DICHTUNGSSTRUKTUR FÜR EINE KÜHLERVORRICHTUNG UND KÜHLERVORRICHTUNG DAMIT
STRUCTURE D'ÉTANCHÉITÉ POUR DISPOSITIF DE REFROIDISSEMENT ET DISPOSITIF DE REFROIDISSEMENT ÉQUIPÉ DE CELUI-CI

(30) Priority: 26.12.2011 JP 2011283409
(43) Date of publication of application: 05.11.2014
(73) Proprietor: Kawasaki Jukogyo Kabushiki Kaisha, Kobe-shi, Hyogo 650-8670 (JP)
(72) Inventor: BANDO, Hiroshi, Hyogo 650-8670 (JP); ICHITANI, Noboru, Hyogo 650-8670 (JP); HAYASHI, Isao, Hyogo 673-8666 (JP); KIYOSHIMA, Kouji, Hyogo 673-8666 (JP); ARIMA, Nanako, Hyogo 650-8670 (JP)
(74) Representative: Leinweber & Zimmermann
(86) International application number: PCT/JP2012/008293
(87) International publication number: WO 2013/099232

(56) References cited:
- EP-A1- 1 887 302
- JP-A- S5 849 891
- JP-A- 2001 520 739
- JP-A- 2006 526 750

## Description

### Technical Field

The present invention relates to a seal structure of a cooler apparatus configured to cause drive trains, whose side walls are opposed to one another and which are arranged in parallel with one another in an orthogonal direction, to convey granular conveyed substances placed on the drive trains and also configured to supply a cooling fluid to the granular conveyed substances from under the drive trains, and the cooler apparatus including the seal structure.

### Background Art

A cement plant is provided with a cooler that conveys high-temperature cement clinkers, produced through preheating, calcinating, and sintering, while cooling the cement clinkers. One example of the cooler is a cooler described in PTL 1. As shown in Fig. 10 of PTL 1, the cooler of PTL 1 includes a plurality of thick plates extending in a conveying direction, and lateral walls are provided at both end portions of the thick plates. The thick plates are arranged in a direction orthogonal to the conveying direction such that these lateral walls are opposed to each other. The cement clinkers are stacked on the thick plates to form a layer. The cooler includes a seal structure configured to prevent the cement clinkers from falling down through a gap between the lateral walls.

The seal structure of the cooler includes a holder. The holder extends through the gap between the lateral walls to project upward. A seal section having a U-shaped cross section whose opening faces downward is provided at an upper end portion of the holder. The seal section covers two opposing lateral walls such that upper portions of these two lateral walls are located in the seal section. With this, a passage having an inverted L shape is formed between the seal section and the lateral wall.

### Citation List

### Patent Literature

PTL 1: Published Japanese Translation of PCT Application No. 2006-526750

EP 1 887 302 A1 discloses a a cooler apparatus.

### Summary of Invention

### Technical Problem

According to the cooler described in PTL 1, cooling air is supplied to a space located under the thick plates. The cooling air is supplied through the thick plates, formed in a lattice shape, to the cement clinkers to cool the cement clinkers. To uniformly cool the entire stacked cement clinkers, a predetermined pressure loss is caused to be generated by the cement clinkers. To generate this pressure loss, the high-pressure cooling air is supplied to the space located under the thick plates. Therefore, the cooling air leaks toward the cement clinkers through not only the thick plates but also various gaps, such as a gap between the lateral walls. In this case, the excessive cooling air has to be supplied, and this uneconomically increases the electric power consumption of an air blower configured to supply the cooling air.

Here, an object of the present invention is to provide a seal structure of a cooler apparatus capable of reducing the amount of cooling air leaking through a gap between side walls, and the cooler apparatus.

### Solution to Problem

A seal structure of a cooler apparatus of the present invention is provided according to claim 1. It is a seal structure of a cooler apparatus, the cooler apparatus being configured to: cause drive trains to move to convey granular conveyed substances placed on the drive trains, the drive trains being arranged in an orthogonal direction such that side walls of the adjacent drive trains are opposed to each other; and supply a cooling fluid to the granular conveyed substances from under the drive trains, the seal structure including: a cover body attached to one of the opposing side walls, the cover body and the one side wall surrounding an upper surface and both side surfaces, in the orthogonal direction, of the other side wall to cover a gap between the opposing side walls from above; and a sealing member provided between the cover body and the other side wall.

According to the present invention, a gap between the cover body and the other side wall is sealed. Therefore, even in a case where the cooling fluid introduced to a space under the drive trains is introduced to the gap between the cover body and the other side wall, the cooling fluid can be prevented from leaking through the gap to the outside. To be specific, the amount of cooling fluid leaking through the gap between the side walls can be reduced.

In the above invention, it is preferable that the seal structure further include a narrow passage forming member provided downstream of the sealing member and configured to form a narrow passage at a labyrinth that is a passage formed between the cover body and the other side wall and communicates with the gap.

According to the above configuration, even in a case where the cooling fluid leaks through a gap between the sealing member and the side wall or the cover body, a resistance can be given to the leaking cooling fluid by the narrow passage. With this, even if the cooling fluid leaks, the amount of leaking cooling fluid can be reduced.

In the above invention, it is preferable that: the one side wall include a fastening portion at an upper portion thereof, the fastening portion extending in the orthogonal direction, that is, a direction away from the other side wall; and the cover body include a flat plate portion extending in the orthogonal direction, and the flat plate portion be placed on the fastening portion to be fastened to the fastening portion.

According to the above configuration, the fastening portion can be caused to appear at an upper side. With this, the fastening portion can be exposed by removing the granular conveyed substances located on the cover body, so that the cover body can be easily detached.

In the above invention, it is preferable that: each of the drive trains include a grate through which the cooling fluid to be supplied to the granular conveyed substances flows; the narrow passage forming member be a grate holding member configured to hold the grate; and the grate holding member be fixed to the other side wall.

According to the above configuration, since the grate holding member can be used also as the narrow passage forming member, the number of parts can be reduced.

In the invention, it is provided that: a lower end portion of an opposing portion of the cover body extend down to a vicinity of the grate, the opposing portion being opposed to the other side wall; and a narrow passage be formed between the lower end portion and the grate.

According to the above configuration, the cover body can be prevented from contacting the grate when causing the drive trains to move, and the granular conveyed substances can be prevented from getting in through the gap between the cover body and the grate.

In the above invention, it is preferable that: the narrow passage forming member include a seal holding member used to attach the sealing member; and the seal holding member be provided at the other side wall so as to project toward the cover body.

According to the above configuration, since the seal holding member can be used also as the narrow passage forming member, the number of parts can be reduced.

A cooler apparatus of the present invention includes any one of the above seal structures.

According to the above configuration, the cooler apparatus having the above-described functions can be realized.

### Advantageous Effects of Invention

The present invention can reduce the amount of cooling air leaking through a gap between lateral walls and therefore can reduce, for example, the electric power consumption of a supply device configured to supply a cooling fluid.

The above object, other objects, features, and advantages of the present invention will be made clear by the following detailed explanation of preferred embodiments with reference to the attached drawings.

### Brief Description of Drawings

[Fig. 1] Fig. 1 is a schematic diagram showing the configuration of a pyroprocessing facility including a cooler apparatus according to the present invention.
[Fig. 2] Fig. 2 is a perspective view schematically showing the configuration of the cooler apparatus of Fig. 1.
[Fig. 3] Fig. 3 is a front view showing the configuration of a cooling unit included in the cooler apparatus of Fig. 2.
[Fig. 4] Fig. 4 is an enlarged cross-sectional view showing a seal structure of Fig. 3.

### Description of Embodiments

Hereinafter, a seal structure 1 according to an embodiment of the present invention and a cooler apparatus 2 including the seal structure 1 will be explained in reference to the above-described drawings. The concept of directions, such as upper, lower, left, right, front, and rear directions, in the embodiment is used for convenience of explanation and does not indicate that the arrangements, directions, and the like of components of the seal structure 1 and the cooler apparatus 2 are limited to the directions. Each of the seal structure 1 and the cooler apparatus 2 explained below is just one embodiment of the present invention, and the present invention is not limited to the embodiment. Additions, deletions, and modifications may be made within the scope of the present invention.

### Cement Plant

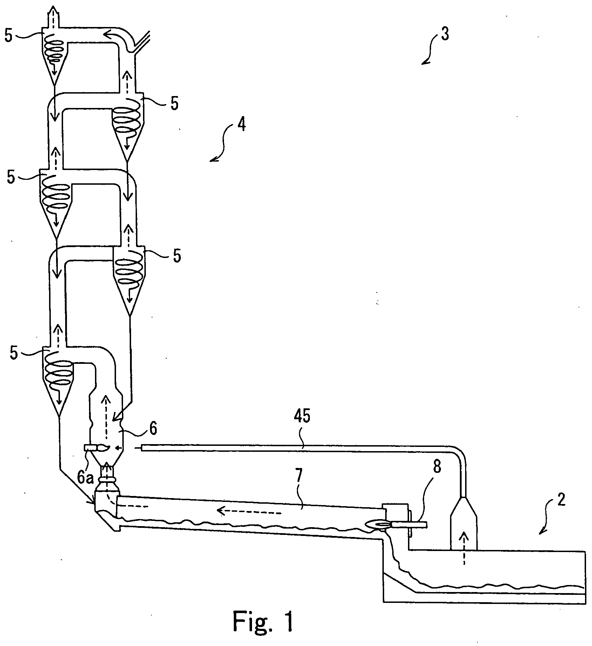

Cement is produced through a raw material grinding step of grinding cement raw meal containing limestone, clay, silica stone, iron, and the like, a pyroprocessing step of firing the ground cement raw meal, and a finishing step that is the last step. These three steps are performed at a cement plant. In the pyroprocessing step that is one of these three steps, the ground cement raw meal is fired and cooled, and thus, granular cement clinkers are produced. Fig. 1 shows a pyroprocessing facility 3 of the cement plant, and the pyroprocessing facility 3 being a portion where the pyroprocessing step in cement manufacturing is performed. The pyroprocessing facility 3 performs preheating, calcinating, and sintering of the cement raw meal ground in the raw material grinding step and cools the granular cement clinkers that are high in temperature by the pyroprocessing.

The portion where the pyroprocessing step is performed will be explained in further detail. The pyroprocessing facility 3 includes a preheater 4, and the preheater 4 is constituted by a plurality of cyclones 5. The cyclones 5 are arranged in an upper-lower direction so as to be provided in a stepped manner. Each cyclone 5 causes exhaust gas therein to flow upward to the cyclone 5 at an upper stage (see broken line arrows in Fig. 1), separates the put cement raw meal from one another by rotational flow, and puts the cement raw meal into the cyclone 5 at a lower stage (see solid line arrows in Fig. 1). The cyclone 5 located immediately above the cyclone 5 at a lowermost stage puts the cement raw meal into a precalciner 6. The precalciner 6 includes a burner 6a. By heat of the burner 6a and heat of below-described exhaust gas, the precalciner 6 performs a reaction (that is, a calcination reaction) by which carbon dioxide is separated from the put cement raw meal. The cement raw meal subjected to the calcination reaction in the precalciner 6 is introduced to the cyclone 5 at the lowermost stage as described below, and the cement raw meal in this cyclone 5 is then put into a rotary kiln 7.

The rotary kiln 7 is formed in a horizontally long cylindrical shape having several tens of meters or longer. The rotary kiln 7 is arranged so as to be slightly inclined downward from an inlet located at the cyclone 5 side toward an outlet located at a tip end side. Therefore, by rotating the rotary kiln 7 about an axis, the cement raw meal at the inlet side is conveyed toward the outlet side. A combustion device 8 is provided at the outlet of the rotary kiln 7. The combustion device 8 generates high-temperature flame toward the inlet side to fire the cement raw meal.

The combustion gas generated by the combustion device 8 flows in the rotary kiln 7 toward the inlet while sintering the cement raw meal. The combustion gas that is high-temperature exhaust gas flows as jet flow upward through a lower end of the precalciner 6 in the precalciner 6 (see a broken line arrow in Fig. 1) to cause the cement raw meal, put in the precalciner 6, to flow upward. The cement raw meal is heated by the exhaust gas and the burner 6a up to about 900°C, that is, is subjected to the calcinating. The flown cement raw meal flows into the cyclone 5 at the lowermost stage together with the exhaust gas, and the flown exhaust gas and cement raw meal are separated from each other in the cyclone 5 at the lowermost stage. The separated cement raw meal is put into the rotary kiln 7, and the separated exhaust gas flows upward to the cyclone 5 located immediately above the cyclone 5 at the lowermost stage. The flown exhaust gas performs heat exchange with the cement raw meal in each cyclone 5 to heat the cement raw meal. Then, the exhaust gas is separated from the cement raw meal again. The separated exhaust gas flows upward to the cyclone 5 located above to repeat the heat exchange. Then, the exhaust gas discharged through the cyclone 5 at an uppermost stage flows through an exhaust gas treatment facility, not shown, to be discharged to the atmosphere.

In the pyroprocessing facility 3 configured as above, the cement raw meal is put through the vicinity of the cyclone 5 at the uppermost stage, is adequately subjected to preheating while performing the heat exchange with the exhaust gas, moves down to the cyclone 5 located immediately above the cyclone 5 at the lowermost stage, and is then put into the precalciner 6. In the precalciner 6, the cement raw meal is subjected to the calcinating by the burner 6a and the high-temperature exhaust gas. Then, the cement raw meal is introduced to the cyclone 5 at the lowermost stage. The cement raw meal is separated from the exhaust gas in the cyclone 5 at the lowermost stage to be put into the rotary kiln 7. The put cement raw meal is conveyed to the outlet side while being subjected to the sintering in the rotary kiln 7. Through the preheating, the calcinating, and the sintering, the cement clinkers are produced. The cooler apparatus 2 is provided at the outlet of the rotary kiln 7, and the produced cement clinkers are discharged from the outlet of the rotary kiln 7 to the cooler apparatus 2.

### Cooler Apparatus

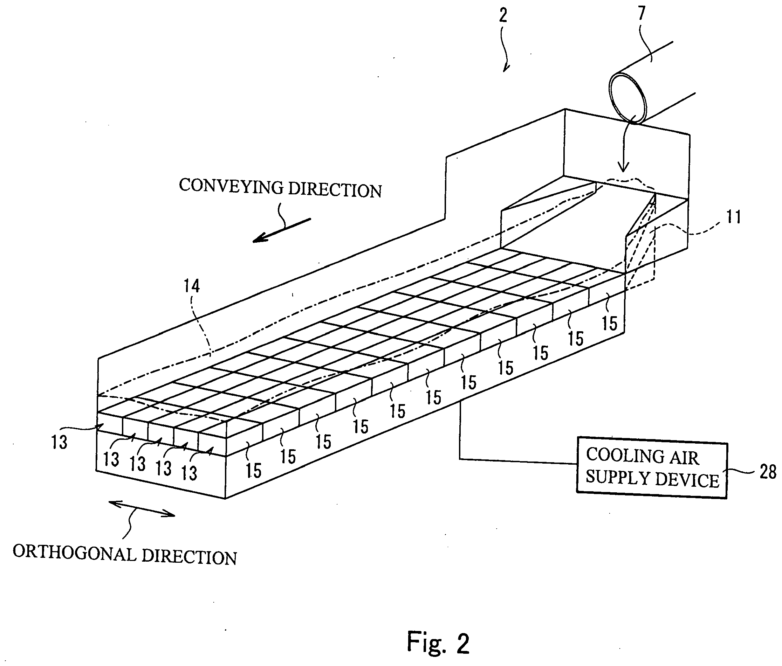

The cooler apparatus 2 cools the cement clinkers (granular conveyed substances), discharged from the rotary kiln 7, while conveying the cement clinkers in a predetermined conveying direction (front-rear direction). As shown in Fig. 2, the cooler apparatus 2 includes a fixed inclined grate 11 located immediately under the outlet of the rotary kiln 7. The fixed inclined grate 11 is inclined downward from the outlet side of the rotary kiln 7 toward the conveying direction. The granular cement clinkers discharged from the outlet of the rotary kiln 7 roll down on the fixed inclined grate 11 in the conveying direction. A plurality of cooling unit trains 13 are provided at a conveying-direction tip end portion of the fixed inclined grate 11. The cement clinkers are deposited on the plurality of cooling unit trains 13 to form a clinker layer 14.

### Cooling Unit Train

The cooling unit trains 13 are structures each extending in the conveying direction. The cooling unit trains 13 are arranged in parallel with one another in an orthogonal direction (that is, a left-right direction) orthogonal to the conveying direction. Below-described seal structures 1 respectively seal gaps each between the adjacent cooling unit trains 13 to prevent the cement clinkers from falling down, and the clinker layer 14 (see a dashed line in Fig. 2) is placed on the plurality of cooling unit trains 13 so as to entirely cover the plurality of cooling unit trains 13.

The plurality of cooling unit trains 13 cool the clinker layer 14 while conveying the clinker layer 14 in the conveying direction. The granular cement clinkers are conveyed by repeating the movement and stop of the clinker layer 14. One example of a specific conveying method is a method of causing all the cooling unit trains 13 to move forward and then causing the cooling unit trains 13 to move backward in such a manner that the cooling unit trains 13 not adjacent to one another are moved backward, and this is performed plural times. According to this method, the clinker layer 14 moves when the cooling unit trains 13 are caused to move forward, and the clinker layer 14 stops when the cooling unit trains 13 are caused to move backward. Therefore, the granular cement clinkers can be conveyed in the conveying direction. Each of the cooling unit trains 13 configured to convey the cement clinkers by the above method includes a plurality of cooling units 15 and is configured such that the cooling units 15 are arranged in a row in the conveying direction.

### Cooling Unit

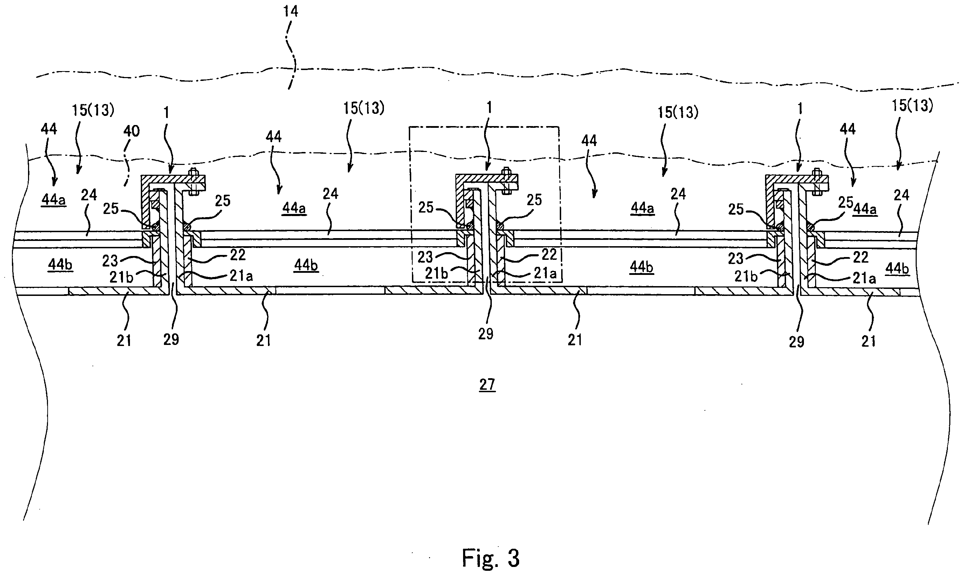

As shown in Fig. 2, the cooling unit 15 is configured in a substantially rectangular parallelepiped box shape and includes a casing 21. The casing 21 has a substantially rectangular parallelepiped box shape, and an upper side thereof is open as shown in Fig. 3. To provide the below-described seal structure 1, both side walls 21a and 21b of the casing 21 are formed to be higher than front and rear walls (not shown) of the casing 21. Grate supporting members 22 and 23 are respectively provided at the side walls 21a and 21b of the casing 21. These two grate supporting members 22 and 23 are respectively provided at inner surfaces of the side walls 21a and 21b and are offset toward an inner side of the casing 21. A grate 24 is placed on these two grate supporting members 22 and 23 so as to extend between the grate supporting members 22 and 23.

The grate 24 is a porous member including a plurality of air holes (not shown) through which the cooling air flows. The air holes are formed such that the cement clinkers do not fall downward through the air holes. The grate 24 is formed such that the cement clinkers can be placed and stacked thereon to form the clinker layer 14. For example, the grate 24 is configured such that: a plurality of plate-shaped members are arranged in a horizontal direction so as to partially overlap one another. In addition, a gap is formed between the adjacent plate-shaped members in the upper-lower direction, so that air holes are formed at the overlapping portions.

An outer size of the grate 24 configured as above substantially coincides with that of an opening of the casing 21. Therefore, the grate 24 is tightly fitted in the casing 21, and both side edge portions of the grate 24 are respectively supported by the grate supporting members 22 and 23. Grate holding members 25 are respectively provided at the inner surfaces of the side walls 21a and 21b of the casing 21. The grate holding members 25 are located so as to be respectively opposed to the grate supporting members 22 and 23 in the upper-lower direction. Each of the grate holding members 25 is a member extending in the conveying direction and having a circular cross section. The grate holding members 25 respectively contact both side edge portions of the grate 24 to hold the grate 24.

The grate 24 provided in the casing 21 as above divides a space 44 in the casing 21 into upper and lower regions 44a and 44b. The upper region 44a is a clinker region 44a in which the cement clinkers are filled. Cement clinkers lower in temperature than the cement clinkers to be conveyed are filled in the upper region 44a to form a dead layer 40. The lower region 44b is an air region 44b to which the cooling air is supplied.

A space 27 is formed under the casing 21. The space 27 communicates with a cooling air supply device 28 (see Fig. 2), and the cooling air is supplied from the cooling air supply device 28 to the space 27. An opening portion through which the space 27 and the air region 44b communicate with each other is formed at a bottom portion of the casing 21.

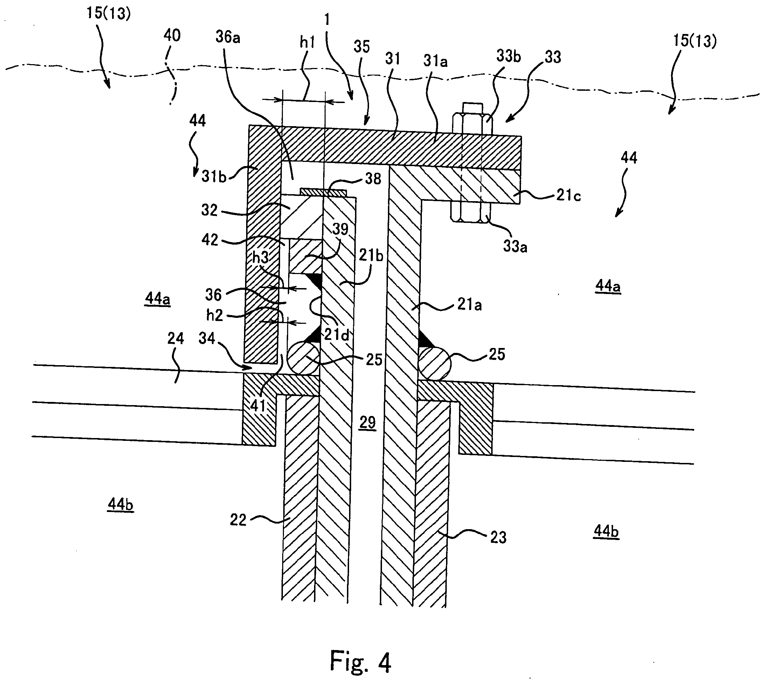

The cooling units 15 configured as above are arranged in a row in the conveying direction such that front and rear end surfaces thereof are opposed to one another. Thus, the cooling unit train 13 extending in the conveying direction as above is configured. Further, the cooling unit trains 13 are arranged in the orthogonal direction such that the side walls 21a and 21b of the cooling units 15 are opposed to one another. As shown in Figs. 3 and 4, a gap 29 is formed between the adjacent cooling unit trains 13, that is, between the side walls 21a and 21b such that the adjacent cooling unit trains 13, that is, the side walls 21a and 21b do not contact each other. Thus, the cooling air supplied to the space 27 gets into the gaps 29. The seal structure 1 is provided at the adjacent side walls 21a and 21b to cover the gap 29 such that: the introduced cooling air is prevented from leaking to the clinker layer 14 (to be specific, the dead layer 40) side; and the cement clinkers constituting the clinker layer 14 (to be specific, the dead layer 40) are prevented from getting into the gap 29. The seal structures 1 are respectively provided at pairs of the adjacent side walls 21a and 21b. These seal structures 1 are the same in configuration as one another. Therefore, hereinafter, the configuration of one seal structure 1 will be explained, and explanations of the configurations of the other seal structures 1 are omitted.

### Seal Structure

As shown in Fig. 4, the seal structure 1 basically includes a cover body 31, a sealing member 32, and a fastening member 33. The cover body 31 has an L-shaped cross section and extends at least from one end up to the other end of the cooling unit train 13 in the conveying direction, that is, from a front end up to a rear end of the cooling unit train 13. The side wall 21a (in the present embodiment, a left side wall 21a) of the cooling unit 15 includes a fastening portion 21c at an upper end portion thereof. The fastening portion 21c projects toward the side wall 21b in one (in the present embodiment, a right direction) of directions along the orthogonal direction. The fastening portion 21c extends in the conveying direction. One end portion of a horizontal portion 31a of the cover body 31 is placed on an upper surface of the fastening portion 21c in a sealed state to be fastened to the fastening portion 21c.

The horizontal portion 31a of the cover body 31 extends further from the fastening portion 21c in the other direction (in the present embodiment, a left direction) along the orthogonal direction. The other end portion of the horizontal portion 31a is located at the orthogonal-direction other side (in the present embodiment, a left side) of the side wall 21b (hereinafter simply referred to as a "right side wall 21b") of the adjacent cooling unit 15 located at a left side. A vertical portion 31b is formed at the other end portion of the horizontal portion 31a. The vertical portion 31b extends vertically downward from the other end portion of the horizontal portion 31a. The vertical portion 31b is opposed to an inner surface 21d of the adjacent right side wall 21b and is located so as to be spaced apart from the inner surface 21d by a predetermined distance h1 in the orthogonal direction. The lower end portion of the vertical portion 31b extends down to the vicinity of a right side edge portion of the grate 24. A gap 34 (for example, about 0.5 to 2 mm) is formed between the lower end portion of the vertical portion 31b and the right side edge portion of the grate 24.

The cover body 31 configured as above and an upper end portion of the left side wall 21a constitute a cover 35 having a U-shaped cross section extending in the conveying direction. The cover 35 covers the upper surface and left and right side surfaces of the right side wall 21b. With this, a labyrinth 36 communicating with the gap 29 between the side walls 21a and 21b is formed in the cover 35. The labyrinth 36 has an L-shaped cross section. The labyrinth 36 communicates with an upper opening of the gap 29, extends therefrom toward the vertical portion 31b of the cover body 31 in the other direction along the orthogonal direction, is bent just before the vertical portion 31b, and extends vertically downward. A lower side of the labyrinth 36 formed in the above shape communicates with a space in the casing 21, that is, an outer space through the gap 34 located under the vertical portion 31b.

The grate holding member 25 welded to the right side wall 21b is provided at the labyrinth 36 having the above shape. The grate holding member 25 is arranged so as to be spaced apart from the vertical portion 31b of the cover body 31 in the orthogonal direction and be partially opposed to the vertical portion 31b. With this, a first narrow passage 41 having a width (h2; for example, about 1 to 3 mm) narrower than a width (h1) of the labyrinth 36 is formed between the lower end side portion of the vertical portion 31b and the grate holding member 25. The sealing member 32 is provided at the labyrinth 36.

The sealing member 32 is a rod-shaped member extending in the conveying direction and has, for example, a quadrangular cross section. The sealing member 32 is located closer to the gap 29 than the grate holding member 25 in the labyrinth 36. To be specific, regarding the flow of the leaking cooling air, the grate holding member 25 is located downstream of the sealing member 32. More specifically, the sealing member 32 is located at a vertical portion 36a of the labyrinth 36, the vertical portion 36a extending in the upper-lower direction, and is located above the grate holding member 25. The sealing member 32 is held by two seal holding members 38 and 39.

The first seal holding member 38 is a plate-shaped member extending in the conveying direction and fixed to the upper surface of the right side wall 21b. A left end portion of the first seal holding member 38 projects from the right side wall 21b toward the vertical portion 36a of the labyrinth 36. The second seal holding member 39 is provided at the right side wall 21b so as to be opposed to the above projecting portion of the first seal holding member 38 in the upper-lower direction. The second seal holding member 39 is a substantially prism-shaped member extending in the conveying direction, located in the labyrinth 36 to be downwardly away from the first seal holding member 38, and welded to the right side wall 21b. To be specific, the first seal holding member 38 is located upstream of the sealing member 32 in the labyrinth 36. The sealing member 32 is fitted so as to be interposed between the seal holding members 38 and 39 arranged as above. In this state, the sealing member 32 seals the gap between the right side wall 21b and the cover body 31.

By the sealing as above, the flow of the cooling air introduced to the gap 29 can be stopped by the sealing member 32, and the cooling air can be prevented from leaking through the labyrinth 36 to the clinker layer 14 side (to be specific, the dead layer 40). With this, the cooling air can be appropriately supplied from the cooling air supply device 28 through the air holes of the grate 24 to the high-temperature clinker layer 14. Thus, the desired cooling performance can be obtained. Further, the electric power consumption of the cooling air supply device 28 can be reduced by preventing the leakage. The cover body 31 and the left side wall 21a surround the upper surface and both side surfaces of the right side wall 21b, and thus, an upper side of the gap 29 is covered. Therefore, even in a case where the cement clinkers are stacked above the gap 29, the cover body 31 can prevent the cement clinkers from getting into the gap 29. Since the labyrinth 36 is formed by the cover body 31, and the lower end portion of the vertical portion 31b extends down to the vicinity of an outer edge portion of the grate 24 to narrow the gap through which the labyrinth 36 and the dead layer 40 communicate with each other, the cement clinkers can be prevented from getting into the gap 29 through the labyrinth 36.

According to the cooler apparatus 2 configured as above, the granular cement clinkers discharged from the rotary kiln 7 are received by the fixed inclined grate 11 to be caused to roll toward the cooling unit trains 13. Then, the cement clinkers are deposited on the cooling unit trains 13 to form the clinker layer 14 on the cooling unit trains 13, and the clinker layer 14 is conveyed in the conveying direction by driving the cooling unit trains 13 based on the above-described method. During the conveyance, the cooling air supply device 28 (fan) is operating, and the cooling air is supplied from the cooling air supply device 28 to the lower space 44b. The cooling air introduced to the lower space 44b is supplied through the grate 24 and the dead layer 40 to the clinker layer 14. Further, the cooling air performs heat exchange with the granular cement clinkers of the clinker layer 14 to flow through the gaps among the granular cement clinkers of the clinker layer 14 while cooling the granular cement clinkers of the clinker layer 14. Then, the cooling air is discharged upward from an upper portion of the clinker layer 14. The air discharged upward is high in temperature by the heat exchange with the granular cement clinkers. A part of the high-temperature air is discharged from the cooler apparatus 2 to be introduced to the kiln 7 and introduced through the discharge pipe 45 to the precalciner 6. According to the cooler apparatus 2, the granular cement clinkers of the clinker layer 14 are conveyed while being cooled by the cooling unit 15 as above, and the granular cement clinkers are continuously cooled down to a temperature slightly higher than an atmospheric temperature.

As described above, according to the cooler apparatus 2, when causing the cooling unit trains 13 to move backward during the operation of conveying the cement clinkers, the adjacent cooling unit trains 13 are relatively displaced. The seal structure 1 contacts the adjacent side walls 21a and 21b so as to achieve the seal performance. Since the adjacent cooling unit trains 13 are relatively displaced as described above, the sealing member 32 is worn away by the relative displacement. By the repetition of the wear, a gap is formed, for example, between the sealing member 32 and the cover body 31, and the cooling air may leak through the gap to the dead layer 40. However, a second narrow passage 42 having a width h3 (for example, about 1 to 3 mm) is formed between the cover body 31 and the second seal holding member 39 projecting toward the vertical portion 31b of the cover body 31, and a resistance is given by the second narrow passage 42 to the cooling air flowing through the labyrinth 36. As with the second narrow passage 42, the first narrow passage 41 and the gap 34 located under the vertical portion 31b also give the resistance to the cooling air flowing through the labyrinth 36. By providing a plurality of narrow passages 41 and 42, the seal performance of the seal structure 1 is improved. Even if the sealing member 32 is worn away, and the cooling air leaks from a gap, for example, between the sealing member 32 and the cover body 31, the amount of cooling air leaking to the dead layer 40 can be suppressed by the first and second narrow passages 41 and 42 and the gap 34 located under the vertical portion 31b. With this, even if the sealing member 32 is worn away, the cooling air can be appropriately supplied through the air holes of the grate 24 to the high-temperature clinkers. Thus, the desired cooling performance can be obtained.

According to the seal structure 1, one end portion of the cover body 31 is placed on the fastening portion 21c of the left side wall 21a to be fastened by the fastening member 33. The fastening member 33 is constituted by a bolt 33a and a nut 33b. The cover body 31 and the left side wall 21a are fastened to each other in such a manner that: the bolt 33a is inserted through one end portion of the cover body 31 and the fastening portion 21c of the left side wall 21a; and the nut 33b is threadedly engaged with a tip end portion of the bolt 33a. Therefore, the bolt 33a or the nut 33b appears on an upper surface of the cover body 31, so that the fastening member 33 is easily detached from the cover body 31. According to the seal structure 1, the sealing member 32 is easily worn away as described above, and the durability thereof is low. Therefore, the replacement cycle of the sealing member 32 is short. On this account, the fastening member 33 is easily detached from the cover body 31 as described above, so that the replacement of the sealing member 32 is easy. Thus, the burden of the replacement work can be reduced.

Since the grate holding member 25 and the second seal holding member 39 can also be used as narrow passage forming members that form the narrow passages 41 and 42, the number of parts can be reduced.

### Other Embodiments

In the above embodiment, the cement clinkers are used as the granular substances forming the dead layer 40. However, heat-resistant granular substances, such as metal granular substances or ceramic granular substances, other than the cement clinkers may be used. The sizes of the particle diameters of the granular substances to be conveyed and the sizes of the particle diameters of the granular substances forming the dead layer 40 are not limited. Further, the dead layer 40 does not have to be provided.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Reference Signs List

- 1: seal structure
- 2: cooler apparatus
- 13: cooling unit train
- 14: clinker layer
- 21: casing
- 21a: left side wall
- 21b: right side wall
- 21c: fastening portion
- 24: grate
- 25: grate holding member
- 29: gap
- 31: cover body
- 32: sealing member
- 33: fastening member
- 34: gap
- 36: labyrinth
- 39: second seal holding member
- 41: first narrow passage
- 42: second narrow passage

## Claims

1. A seal structure (1) of a cooler apparatus, the cooler apparatus being configured to cause drive trains (13) to move to convey granular conveyed substances placed on the drive trains, the drive trains (13) being arranged in an orthogonal direction such that side walls (21a, 21b) of the adjacent drive trains are opposed to each other, and supply a cooling fluid to the granular conveyed substances from under the drive trains, the seal structure comprising: a cover body (31) attached to one of the opposing side walls (21a), the cover body and the one side wall surrounding an upper surface and both side surfaces, in the orthogonal direction, of the other side wall (21b) to cover a gap (29) between the opposing side walls from above, a lower end portion of an opposing portion of the cover body extending down to a vicinity of the grate (24), the opposing portion being opposed to the other side wall, a narrow passage being formed between the lower end portion and the grate (34), and a sealing member (32) provided between the cover body and the other side wall.

2. The seal structure according to claim 1, further comprising a narrow passage forming member (25,39) provided downstream of the sealing member and configured to form a narrow passage (41) at a labyrinth that is a passage formed between the cover body and the other side wall and communicates with the gap.

3. The seal structure according to claim 1 or 2, wherein: the one side wall includes a fastening portion (21c) at an upper portion thereof, the fastening portion extending in the orthogonal direction, that is, a direction away from the other side wall; and the cover body includes a flat plate portion (31a) extending in the orthogonal direction, and the flat plate portion is placed on the fastening portion to be fastened to the fastening portion.

4. The seal structure according to any one of claims 2 to 3, wherein: each of the drive trains (13) includes a grate (24) through which the cooling fluid to be supplied to the granular conveyed substances flows; the narrow passage forming member (25) is a grate holding member configured to hold the grate; and the grate holding member is fixed to the other side wall (21b).

5. The seal structure according to any one of claims 2 to 4, wherein: the narrow passage forming member (25, 39) includes a seal holding member (39) used to attach the sealing member; and the seal holding member is provided at the other side wall (21b) so as to project toward the cover body (31).

6. A cooler apparatus (2) comprising the seal structure (1) according to any one of claims 1 to 5.

## Patentansprüche

1. Dichtungsstruktur (1) einer Kühlervorrichtung, wobei die Kühlervorrichtung konfiguriert ist zum Bewirken, dass sich Antriebsstränge (13) bewegen, um auf den Antriebssträngen angeordnete körnige geförderte Substanzen zu befördern, wobei die Antriebsstränge (13) in einer orthogonalen Richtung angeordnet sind, so dass Seitenwände (21a, 21b) von benachbarten Antriebssträngen einander gegenüber liegen, und zum Zufuhren einer Kühlflüssigkeit in die körnigen geförderten Substanzen unter den Antriebssträngen, wobei die Dichtungsstruktur umfasst: einen Abdeckkörper (31), der an einer der gegenüber liegenden Seitenwände (21a) angebracht ist, wobei der Abdeckkörper und die eine Seitenwand eine obere Fläche und beide Seitenflächen der anderen Seitenwand (21b) in der orthogonalen Richtung umgeben, um eine Lücke (29) zwischen den gegenüber liegenden Seitenwänden von oben abzudecken, wobei sich ein unterer Endabschnitt eines gegenüber liegenden Abschnitts des Abdeckkörpers bis in die Nähe des Gitters (24) erstreckt, wobei der gegenüber liegende Abschnitt der anderen Seitenwand gegenüber liegt, wobei ein schmaler Durchgang zwischen dem unteren Endabschnitt und dem Gitter (34) ausgebildet ist, und ein Dichtungselement (32), das zwischen dem Abdeckkörper und der anderen Seitenwand vorgesehen ist.

2. Dichtungsstruktur gemäß Anspruch 1, die weiterhin umfasst: ein Element (25, 39) zur Bildung eines schmalen Durchgangs, das stromabwärts des Dichtungselements vorgesehen ist und dazu konfiguriert ist, einen schmalen Durchgang (41) in einem Labyrinth zu bilden, bei dem es sich um einen Durchgang zwischen dem Abdeckkörper und der anderen Seitenwand handelt und das mit dem Zwischenraum in Verbindung steht.

3. Dichtungsstruktur gemäß Anspruch 1 oder 2, wobei:
die eine Seitenwand einen Befestigungsabschnitt (21c) an einem oberen Abschnitt davon umfasst, wobei sich der Befestigungsabschnitt in der orthogonalen Richtung erstreckt, das heißt, in eine Richtung weg von der anderen Seitenwand; und wobei der Abdeckkörper einen flachen Plattenabschnitt (31a) umfasst, der sich in der orthogonalen Richtung erstreckt, und der flache Plattenabschnitt an dem Befestigungsabschnitt angeordnet wird, um an dem Befestigungsabschnitt befestigt zu werden.

4. Dichtungsstruktur gemäß einem der Ansprüche 2 und 3, wobei:
jeder der Antriebsstränge (13) ein Gitter (24) aufweist, durch das die an die körnigen geförderten Substanzen zuzuführende Kühlflüssigkeit strömt; es sich bei dem Element (25) zur Bildung eines schmalen Durchgangs um ein Gitterhalteelement handelt, das dazu konfiguriert ist, das Gitter zu halten; und das Gitterhalteelement an der anderen Seitenwand (21b) befestigt ist.

5. Dichtungsstruktur gemäß einem der Ansprüche 2 bis 4, wobei:
das Element (25, 39) zur Bildung eines schmalen Durchgangs ein Dichtungshalteelement (39) aufweist, das dazu verwendet wird, das Dichtungselement zu befestigen; und das Dichtungshalteelement an der anderen Seitenwand (21b) derart vorgesehen ist, dass es in Richtung des Abdeckkörpers (31) hervorsteht.

6. Kühlervorrichtung (2), die die Dichtungsstruktur (1) gemäß einem der Ansprüche 1 bis 5 umfasst.

## Revendications

1. Structure d'étanchéité (1) pour un dispositif refroidisseur, le dispositif refroidisseur étant conçu pour mettre en mouvement des chaînes motrices (13) afin de transporter des substances granulaires transportées disposées sur les chaînes motrices, les chaînes motrices (13) étant agencées dans un sens orthogonal de manière que les parois latérales (21a, 21b) des chaînes motrices adjacentes sont opposées les unes aux autres, et pour apporter, par-dessous les chaînes motrices, un fluide de refroidissement aux substances granulaires transportées ; la structure d'étanchéité comprenant: un corps protecteur (31) rattaché à l'une des parois latérales (21a) opposées, le corps protecteur et ladite une paroi latérale entourant une surface supérieure et les deux surfaces latérales, dans le sens orthogonal, de l'autre paroi latérale (21b) afin de couvrir, par le dessus, un intervalle (29) existant entre les parois latérales opposées, une section terminale inférieure d'une section, opposée, du corps protecteur descendant jusqu'aux environs de la grille (24), la section opposée étant opposée à l'autre paroi latérale, un passage étroit étant formé entre la section terminale inférieure et la grille (24), et un élément d'étanchéité (32) prévu entre le corps protecteur et l'autre paroi latérale.

2. Structure d'étanchéité selon la revendication 1, comprenant en outre un élément de formation de passage étroit (25, 39) prévu en aval de l'élément d'étanchéité et conçu pour former un passage étroit (41) au niveau d'un labyrinthe consistant en un passage formé entre le corps protecteur et l'autre paroi latérale et communiquant avec l'intervalle.

3. Structure d'étanchéité selon la revendication 1 ou 2, dans laquelle :
ladite une paroi latérale comporte une partie de fixation (21c) au niveau d'une section supérieure de celle-ci, la partie de fixation s'étendant dans le sens orthogonal, c'est-à-dire dans un sens allant en s'écartant de l'autre paroi latérale ; et le corps protecteur comporte une partie de plaque plane (31a) s'étendant dans le sens orthogonal, et la partie de plaque plane est disposée sur la partie de fixation afin d'être fixée à la partie de fixation.

4. Structure d'étanchéité selon l'une quelconque des revendications 2 et 3, dans laquelle :
chacune des chaînes motrices (13) comporte une grille (24) par laquelle passe le fluide de refroidissement à apporter aux substances granulaires transportées ; l'élément de formation de passage étroit (25) est un élément de support de grille conçu pour supporter la grille ; et l'élément de support de grille est fixé à l'autre paroi latérale (21b).

5. Structure d'étanchéité selon l'une quelconque des revendications 2 à 4, dans laquelle :
l'élément de formation de passage étroit (25, 39) comporte un élément de support d'élément d'étanchéité (39) servant à rattacher l'élément d'étanchéité ; et l'élément de support d'élément d'étanchéité est prévu au niveau de l'autre paroi latérale (21b) de manière à faire saillie vers le corps protecteur (31).

6. Dispositif refroidisseur (2) comprenant la structure d'étanchéité (1) selon l'une quelconque des revendications 1 à 5.
